# EUROPEAN PATENT SPECIFICATION

(11) **EP 4 199 160 B1**
(45) Date of publication and mention of the grant of the patent: **05.03.2025**
(21) Application number: 21214466.1
(22) Date of filing: 14.12.2021
(51) Int. Cl.: H01M 8/0258, H01M 8/10

(54) **PLATE DEVICE FOR A FUEL STACK AND FUEL CELL DEVICE COMPRISING THE SAME**
PLATTENVORRICHTUNG FÜR EINEN BRENNSTOFFZELLENSTAPEL UND BRENNSTOFFZELLENVORRICHTUNG DAMIT
DISPOSITIF DE PLAQUE POUR UNE PILE À COMBUSTIBLE ET DISPOSITIF DE PILE À COMBUSTIBLE LE COMPRENANT

(43) Date of publication of application: 21.06.2023
(73) Proprietor: AVL List GmbH, 8020 Graz (AT); AVL Fuel Cell Canada Inc., Burnaby, British Columbia V5A4N8 (CA)
(72) Inventor: Raibeck, Laura, Vancouver, V5N 4G2 (CA); Buck, David, Port Coquitlam, V3C 5J4 (CA)
(74) Representative: Gamper, Bettina

(56) References cited:
- US-A1- 2013 196 249
- US-A1- 2014 356 759
- US-A1- 2015 333 343
- US-A1- 2017 200 957
- US-A1- 2019 198 889

## Description

The present application relates to a plate device for an electrochemical fuel cell stack for distributing and collecting a fluid across planar dimensions of a cell, and a fuel cell device comprising at least one plate device per each cell for a fluid communication with at least one fluid port of the fuel cell device.

### Technical field of the invention

The plate device according to the invention is suitable for a fuel cell system, in particular a compact fuel cell power source for transportation applications having a proton exchange membrane (PEM-FC) or any other type of electrochemical device comprising a stack of cells accommodating channels or other kinds of pathways for conducting fluids for electrochemical reaction in the cells.

### Background of the invention

Transportation applications require a compact fuel cell power source. This implies a compact design of a complex structures of ports, channels and pathways in the fuel cell stack for supplying all operation fluids to the cells. For an economical manufacturing and assembling, the design of a fuel cell stack strives for stackable parts to be repeatedly stacked to form so-called unit cells building up the fuel cell stack. As a result, a compact structure of ports, channels and pathways for the operation fluids needs to be integrated into a design of the stackable parts. Several compact fuel cell stack designs integrate different kinds of channels and manifolds for supply of hydrogen and air as well as discharge of unused species, or exhaust gas of water or wet gaseous fluid within the stack cross-section.

It is known to provide so-called transition regions of a fuel cell stack or transition sections on a plate within the fuel cell stack on e.g. two opposite sides of the cells for branching-off fluids from fluid ports passing through the fuel cell stack. Such transition regions provide a fluid communication interface to the cells. A common stack design is constituted by the membrane-electrode assemblies of each cell to be stacked between bipolar plates providing electrical conductivity between the cells. In a common compact stack design, such transition regions are provided within outer sections of the bipolar plates or dedicated flow plates extending beyond planar dimension of the active area of the membrane-electrode assemblies. In this compact stack design, the supply and discharge of fluid in communication with the cells is accommodated in the form of internal channels or pathways integrated in the bipolar plates or flow plates by forming open flow cross-sections recessed in surfaces of adjacently stacked plates or any other elements of the stack.

For a good electrochemical efficiency of a fuel cell, it is crucial that a flow design of the transition sections aim to achieve a preferrable uniform pressure and mass distribution across an entrance of the active area within an interface between the stack and the cell for a possibly even fluid flow distribution or wetting of the membrane-electrode assembly via a flat shaped cross-section across a full width of the cell. In a common design of such transition region or flow plate section, the flat shaped flow cross-section is populated with pillar like flow features for scattering and spreading a fluid flow between a narrow inlet and a broad outlet while at the same time supporting the membrane-electrode assembly.

However, this common design is facing a disadvantage that the pillar arrays in total take up plenty of space within the transition sections resulting in a reduced volumetric power density or less compact design of the fuel cell stack. Another disadvantage is that in terms of influencing a fluid flow, the pillar arrays achieve good diffusion, but may not necessarily achieve a uniform pressure or mass flow distribution. In terms of a maximum volumetric power density by minimal flow resistance, an ideal flow design would have no pillars at all, but these are still required to support the membrane-electrode assembly. Without pillars, pressure differences of the reactants on both sides of the plate would push the membrane-electrode assembly, in particular soft material of a gas diffusion layer, into the transition section and would block fluid flow (typically oxidant) in the flat shaped cross-section of the same.

Further drawbacks of the conventional flow design of a typically rectangular transition section having a pillar array within boundaries are that the pillars across all three fluids (i.e. also different stacked flow plates) have to line up for structural integrity, and achievement of a comparably low flow rate along the boundaries of the transition section.

Further plate devices for an electrochemical fuel cell stack are shown in US 2015/333343 A1, US 2017/200957 A1, US 2014/356759 A1, US 2019/198889 A1 and US 2013/196249 A1.

### Summary of the Invention

It is an object of the invention to avoid the described drawbacks in the prior art and to provide an enhanced design of a plate device as a part of a fuel cell stack reaching more structural integrity and leak tightness for ensuring operational security of a fuel cell device.

The object is solved by a plate device having the features of claim 1 and a corresponding electrochemical fuel cell device having these features. Further features and details of the invention result from the dependent claims, the specification, and the drawings.

The invention proposes a plate device for an electrochemical fuel cell stack having stacked cells. The plate device is provided per each cell for distributing and collecting a fluid across planar dimensions of a cell. The plate device comprises a centrally arranged cell section, an outer arranged port section and a transition section arranged in between. The central cell section encompasses a plurality of channels across planar dimensions of a cell. The outer port section encloses a cross-section opening of a fluid port passing through the plate device in a thickness direction. The transition section forms a flat shaped flow cross-section for distributing or collecting a fluid to be transferred in a planar direction of the plate device in fluid communication between the fluid port and the cell. A plurality of flow features is disposed within the transition section and the transition section is enclosed by a boundary. According to the invention, the flow plate device has at least one support feature integrally formed with the boundary and with at least one of outermost arranged flow features out of the plurality of flow features for strutting the flat flow cross-section in a thickness direction of the flow plate device.

Hence, for the first time, the invention provides a flow design for a transition region of a fuel cell stack or transition section on a flow plate that introduces additional plate material in a region between plate profile sections at a cavity boundary and plate profile sections having flow effective features within such cavity.

As a first advantage, the additional plate material of the support features according to the invention struts a bottom area and a ceiling area of the cavity of the flat shaped flow cross-section against a stacking pressure load, which means that an additional strutting for a flow plate profile is provided in a cavity boundary region of a flow plate profile which is subject to distortion due to being biased by partial pressure loads while taking up a stacking pressure. Hence, the support features according to the invention contribute to the structural integrity of a plate device such as a flow plate.

As a second advantage the support features on the edges of the boundaries aid in preventing internal fuel to oxidant leaks, especially in embodiments where the membrane-electrode assembly has two gas diffusion layers on both sides extending into the transition section, thus insuring more operational security of a corresponding fuel cell device.

As a third advantage, at the same time, the support features according to the invention can also be used for influencing the flow of a fluid to be transferred along pathways between a fluid port and a cell and vice versa. More particular, an individual configuration and positioning of the support features allows for an individual optimization of the flow design at the boundary of the transition section and/or an optimization with respect to a flow behavior of an individual gaseous, wet or liquid operating fluid like e.g. air or coolant to be transferred.

According to a preferred embodiment, one kind of the support features and the boundary integrally forms together a zig-zag contour extending into the transition section. With this configuration, the transition section of the plate is reinforced by additional plate material of the zig-zag contour strutting a boundary region within the cavity of the flat shaped flow cross-section.

According to an aspect of the preferred embodiment, a transition section for an oxidant gas based operating fluid, or for a fuel gas based operating fluid has the kind of the support features integrally forming a zig-zag contour with the boundary. In research and development in the context of the present invention, the zig-zag contour turned out to provide a beneficial flow effective influence on at least gaseous fluids, if being arranged an aligned in a portion of the transition section so as to divert or deflect a peripheral part of the transferred fluid flow in directions across a full width of the active area of a respective cell. Furthermore, the zig-zag contour also turned out to prevent intrusion of the membrane-electrode assembly, in particular soft material of a gas diffusion layer, from intruding into the cavity of the transition section near the boundary.

According to the invention vias of a coolant are arranged between a fluid port and the transition section for providing a fluid communication in between, and another kind of the support features and parts of the boundary positioned between the vias integrally form together protrusions of channeling walls extending into the transition section. With this configuration, the transition section of the plate is reinforced by additional plate material at the mouth of vias or end of channels into the transition section strutting a boundary region within the cavity of the flat shaped flow cross-section.

According to an aspect of the other preferred embodiment, a transition section for a coolant fluid has the kind of the support features integrally forming with the boundary protrusions of channeling walls. The protrusions of channeling walls have a beneficial flow effective influence on the liquid coolant so as to guide the same in directions aligned for achieving an even flow distribution across a full width of the active area of a respective cell.

For the advantage of simplification, at least a part of the plurality of flow features can be arranged in an array of equidistantly positioned rows of flow features having the form of circular or prismatic pillars for diffusing a fluid flow. Such configuration ensures an even scattering and distribution of fluid flow in the space of the transition section.

According to an alternative aspect of the invention, at least another part of the plurality of flow features includes flow features having an elongated cross-section for guiding a fluid flow. Such configuration allows for further optimizing a fluid flow distribution with respect to a given geometry of the cavity of the transition section with respect to a directivity and positioning of openings for fluid entry and fluid exit.

According to an embodiment the plate device has three fluid ports for three operating fluids including an oxidant gas-based fluid, a fuel gas-based fluid and a coolant fluid; wherein the flow plate comprises a transition section for at least one of the operating fluids, or the flow plate comprises one transition section for each operating fluid. Hence, the plate device preferably includes pathways for transferring more than one operating fluid to and from a respective cell.

According to a preferred embodiment the plate device has three fluid ports for three operating fluids including an oxidant gas-based fluid, a fuel gas-based fluid and a coolant fluid; wherein the flow plate comprises on one side a transition section for one of the operating fluids and on the other side a transition section for another one of the operating fluids. Hence, the plate device preferably includes pathways for transferring operating fluids on both sides of the plate device.

The invention also provides an electrochemical fuel cell device having a stack arrangement of stacked cells, and accommodating fluid ports for operating fluids passing through a stacking direction of the stack arrangement; and said plate device as discussed above is arranged between each of the stacked cells for distributing and collecting an operating fluid between the cells and the fluid ports.

Further objectives, advantages, features and applications of the present invention arise from the following description of the exemplary embodiments with reference to the drawings. In the drawing:
- Fig. 1: shows a schematic representation of an overall configuration and sectioning of a plate device; and
- Fig. 2: shows, in accordance with a certain stack structure of a fuel cell device, fractions of a cross-section of individual transition sections for different operating fluids on a plate device according to embodiments of the present invention.

### Detailed description of the Invention

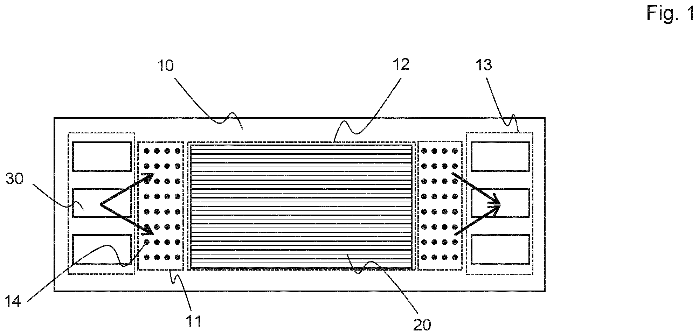

Fig. 1 shows a plate device 10 in the perspective of a cross-section of a stack arrangement in a fuel cell device. In this plane view, the plate device 10 exhibits certain sections marked by dashed lines. A centrally arranged cell section 12 is congruent to a cell 20 not illustrated to be stacked on the plate device 10. The cell section 12 comprises channels (not illustrated) in contact with the cell 20 running parallel and straight between opposite sides of the cell 20. The cell 20 comprises a membrane-electrode assembly (MEA) including all electrochemically active elements of the cells 20 as well as gas diffusion layer on an upper and lower side for distributing fluids to the membrane. The fuel cell device comprises fluid ports 30 passing through the fuel cell stack in a stacking direction, as depicted by respective fluid port cross-sections arranged in two outer arranged port section 13 of the plate device 10 on opposite sides of the cell 20.

Between the cell section 12 and each of the two the port sections 13, the plate device 10 comprises transition sections 11. The transition sections 11 serve for distributing a fluid supplied by the fluid port 30 depicted on the left-hand side across the depicted width dimension of the cell 20 and for collecting the fluid across the width of the cell 20 for returning the fluid in the fluid port 30 depicted on the right-hand side. On one side, the transition sections 11 are in fluid communication with one of the fluid ports 30 by means of vias (not illustrated in Fig. 1), i.e. small bores or channels branching of fluid from and into the fluid ports 30 at a predefined stacking level and height of the respective plate device 10. On the other side, the transition sections 11 are in in fluid communication with gas diffusion layers of the cell 20 via an open interface area having a flat shaped flow cross-section across the width dimension of the cell 20.

The advantages of the disclosed invention apply to cells 20 having a type of membrane-electrode assembly of only one gas diffusion layer extending into the transition sections 11 of the plate device 10, as well as to a type of membrane-electrode assembly having two gas diffusion layers, each on one of opposite sides of the plate device 10 extending into the transition sections 11 of same.

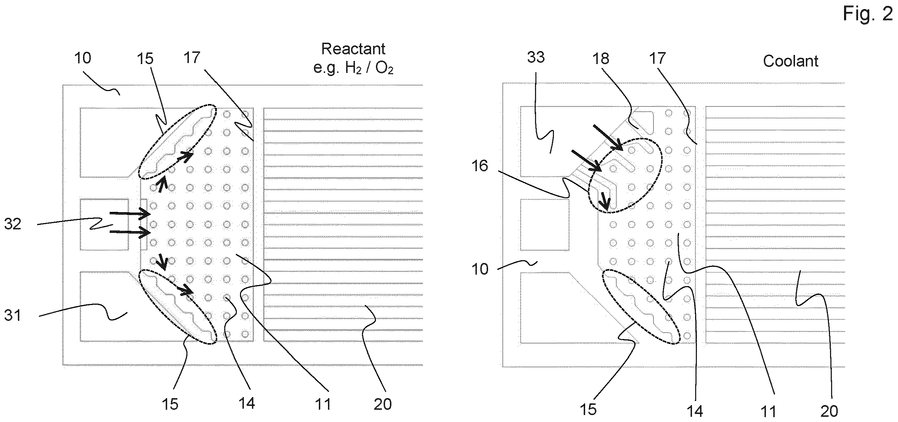

Fig. 2 shows fractions of a specific configuration of different profiles of a plate device 10 for reactants according to embodiments. The fractions of the plate devices 10 depicted enclose delivering fluid ports, one fluid port 31 for an oxidant, one fluid port for a fuel 32, and one fluid port 33 for a coolant. In line with this, the profile of the plate device 10 on the left-hand side is designed to transfer a fuel gas, i.e. hydrogen, or an reacted exhaust gas thereof. The profile of the plate device 10 on the right-hand side is designed to transfer a coolant circulating around the cell.

When each fluid exits the supplying fluid port 31, 32, 33, it is contained in roughly a third of the width of the plate device 10, since there are three fluid port cross-sections. The fluid shall spread out to the full width of the plate device 10 as it enters the active area of the cell 20 via channels in the cell section 12 of the plate device 10. This spreading out of flow is promoted by flow features 14 in the transition sections 11 which is delimited by a boundary 17 in the form of a delimiting inner wall.

All transition sections 11 in the depicted embodiments exhibit a diffusive array of equidistantly arranged flow features 14 having a pillar shape through-out the entire area of transition section 11. Also for supporting a directivity and a broadening or narrowing of a fluid flow, the plate devices 10 might comprise other flow features 14 having an inclined, elongated cross-section for guiding or diverting a fluid flow.

The transition sections 11 for the fuel supplied via fluid port 32 depicted on the left-hand side, and likewise for a non-depicted transition section 11 for an oxidant supplied via fluid port 31 comprise a kind of the support features 15 that integrally forms together with the boundary 17 of the transition section 11 a zig-zag contour of a delimiting wall in the plate profile. The zig-zag contour also integrally encloses some of the pillar-like flow features 14 in a first row of the array of flow features 14 closest to the boundary 17. Plate material filling a space in imaginary triangles between such enclosed pillar-like flow features 14 and an original line of the boundary 17 as it was meant to be without said support features 15, supports the plate structure by additionally strutting the cavity of the transition section 11 and by reinforcing said enclosed flow features 14 against biased loads or distortion. As a result, the support features 15 strengthen the plate profile in the boundary 17 region of the cavity of the transition section 11.

As a side effect, due to the characteristic zig, zag shape and predetermined alignment of the direction of the exposed surfaces of the support features 15, a positive flow influence is effected by diverting a peripheral fluid flow from the boundary 17 into a direction of the cell 20.

On the right-hand side of Fig. 2, the transition section 11 for the coolant comprises another kind of support features 16 formed as a protrusion of walls extending from the boundary 17 into the space of the transition section 11 while separating a channelling of vias 18 connecting the fluid port 33 to the transition section 11. This kind of support features 16 are integrally formed together with the boundary 17 and some of the pillar-like flow features 14 of the array of flow features 14 being closest between said vias 18. Also with this kind of support features 16, plate material filling a space in an imaginary longitudinal area between said pillar-like flow features 14 and an original line of the boundary 17 as it was meant to be without said support features 16, supports the plate structure by additionally strutting the cavity of the transition section 11 and by reinforcing said enclosed flow features 14 against biased loads or distortion. Hence, these support features 16 likewise strengthen the plate profile in the boundary 17 region of the cavity of the transition section 11.

By choosing an appropriate alignment in parallel with the vias or with respect to an arrangement of other flow features 14 having an elongated cross-section, this kind of support features 16 contributes to guide and divert an initial fluid flow in a desired directivity for achieving an even flow distribution through-out a width of the cell 20.

### List of reference characters

- 10: plate device
- 11: transition section
- 12: cell section
- 13: port section
- 14: flow features
- 15: support features (zig-zag form)
- 16: support features (wall-protrusion form)
- 17: boundary
- 18: vias
- 20: cell
- 30: fluid port
- 31: oxidant port
- 32: fuel port
- 33: coolant port

## Claims

1. A plate device (10) for an electrochemical fuel cell (20) stack having stacked cells (20); wherein
the plate device (10) being provided per each cell (20) for distributing and collecting a fluid across planar dimensions of a cell (20); wherein the plate device (10) comprises:
a central cell section (12) encompassing a plurality of channels across planar dimensions of a cell (20);
an outer port section (13) enclosing a cross-section opening of a fluid port (30, 31, 32, 33) passing through the plate device (10) in a thickness direction; and
a transition section (11) forming a flat shaped flow cross-section for distributing or collecting a fluid to be transferred in a planar direction of the plate device (10) in fluid communication between the fluid port (30, 31, 32, 33) and the cell (20), wherein a plurality of flow features (14) is disposed within the transition section (11) and the transition section (11) is enclosed by a boundary (17), wherein
the plate device (10) having at least one support feature (15, 16) being integrally formed with the boundary (17) and with at least one of outermost arranged flow features (14) out of the plurality of flow features (14),
wherein vias (18) are arranged between a fluid port (30, 31, 32, 33) and the transition section (11) for providing a fluid communication in between; and wherein
another kind of the support features (16) and parts of the boundary (17) positioned between the vias (18) integrally form together protrusions of channeling walls extending into the transition section (11).

2. The plate device (10) according to claim 1, wherein one kind of the support features (15) and the boundary (17) integrally form together a zig-zag contour extending into the transition section (11).

3. The plate device (10) according to claim 2, wherein a transition section (11) for an oxidant gas based operating fluid, or for a fuel gas based operating fluid has the kind of the support features (15) integrally forming with the boundary (17) a zig-zag contour.

4. The plate device (10) according to claim 1, wherein a transition section (11) for a coolant fluid has the kind of the support features (16) integrally forming with the boundary (17) protrusions of channeling walls.

5. The plate device (10) according to any of the preceding claims, wherein at least a part of the plurality of flow features (14) is arranged in an array of equidistantly positioned rows of flow features (14) having the form of circular or prismatic pillars for diffusing a fluid flow.

6. The plate device (10) according to claim 5, wherein at least another part of the plurality of flow features (14) includes flow features (14) having an elongated cross-section for guiding a fluid flow.

7. The plate device (10) according to one of the preceding claims, having three fluid ports (31, 32, 33) for three operating fluids including an oxidant gas-based fluid, a fuel gas-based fluid and a coolant fluid; wherein the flow plate comprises a transition section (11) for at least one of the operating fluids, or the flow plate comprises one transition section (11) for each operating fluid.

8. The plate device (10) according to one of the preceding claims, having three fluid ports (31, 32, 33) for three operating fluids including an oxidant gas-based fluid, a fuel gas-based fluid and a coolant fluid; wherein the flow plate comprises on one side a transition section (11) for one of the operating fluids and on the other side a transition section (11) for another one of the operating fluids.

9. An electrochemical fuel cell device having a stack arrangement of stacked cells (20), and accommodating fluid ports (30, 31, 32, 33) for operating fluids passing through a stacking direction of the stack arrangement; wherein
the fuel cell device comprises between each of the stacked cells (20) at least one plate device (10) according to any of claims 1 to 7 for distributing and collecting an operating fluid between the cells (20) and the fluid ports (30, 31, 32, 33).

## Patentansprüche

1. Plattenvorrichtung (10) für einen elektrochemischen Brennstoffzellenstapel (20) mit gestapelten Zellen (20); wobei
die Plattenvorrichtung (10) für jede Zelle (20) zum Verteilen und Sammeln eines Fluids über ebene Abmessungen einer Zelle (20) vorgesehen ist; wobei die Plattenvorrichtung (10) umfasst:
einen zentralen Zellenabschnitt (12), der eine Vielzahl von Kanälen über ebene Abmessungen einer Zelle (20) umfasst;
einen äußeren Anschlussabschnitt (13), der eine Querschnittsöffnung eines Fluidanschlusses (30, 31, 32, 33) umschließt, der durch die Plattenvorrichtung (10) in einer Dickenrichtung verläuft; und
einen Übergangsabschnitt (11), der einen flach geformten Strömungsquerschnitt zum Verteilen oder Sammeln eines zu übertragenden Fluids in einer planaren Richtung der Plattenvorrichtung (10) in Fluidverbindung zwischen dem Fluidanschluss (30, 31, 32, 33) und der Zelle (20) bildet, wobei eine Mehrzahl von Strömungselementen (14) innerhalb des Übergangsabschnitts (11) angeordnet ist und der Übergangsabschnitt (11) von einer Begrenzung (17) umschlossen ist, wobei
die Plattenvorrichtung (10) mindestens eine Stützelement (15, 16) aufweist, das einstückig mit der Begrenzung (17) und mit mindestens einem der am weitesten außen angeordneten Strömungselement (14) aus der Vielzahl von Strömungselementen (14) ausgebildet ist, wobei
Durchgangsöffnungen (18) zwischen einem Fluidanschluss (30, 31, 32, 33) und dem Übergangsabschnitt (11) angeordnet sind, um eine Fluidverbindung dazwischen herzustellen; und wobei
eine andere Art der Stützelemente (16) und Teile der Begrenzung (17), die zwischen den Durchgangsöffnungen (18) positioniert sind, einstückig zusammen Vorsprünge von Kanalisierungswänden bilden, die sich in den Übergangsabschnitt (11) erstrecken.

2. Plattenvorrichtung (10) nach Anspruch 1, wobei eine Art der Stützelemente (15) und die Begrenzung (17) zusammen eine Zick-Zack-Kontur bilden, die sich in den Übergangsabschnitt (11) erstreckt.

3. Plattenvorrichtung (10) nach Anspruch 2, wobei ein Übergangsabschnitt (11) für ein Betriebsfluid auf der Basis von oxidierendem Gas oder für ein Betriebsfluid auf der Basis von Brenngas die Art der Stützelemente (15) aufweist, die einstückig mit der Begrenzung (17) eine Zick-Zack-Kontur bilden.

4. Plattenvorrichtung (10) nach Anspruch 1, wobei ein Übergangsabschnitt (11) für ein Kühlmittelfluid die Art von Stützelementen (16) aufweist, die einstückig mit den Begrenzungsvorsprüngen (17) von Kanalisierungswänden ausgebildet sind.

5. Plattenvorrichtung (10) nach einem der vorhergehenden Ansprüche, wobei zumindest ein Teil der Vielzahl von Strömungselementen (14) in einer Anordnung von äquidistant angeordneten Reihen von Strömungselementen (14) in Form von kreisförmigen oder prismatischen Säulen zur Diffusion einer Fluidströmung angeordnet ist.

6. Plattenvorrichtung (10) nach Anspruch 5, wobei mindestens ein anderer Teil der Vielzahl von Strömungselementen (14) Strömungselemente (14) mit einem länglichen Querschnitt zur Führung eines Fluidstroms aufweist.

7. Plattenvorrichtung (10) nach einem der vorhergehenden Ansprüche, mit drei Fluidanschlüssen (31, 32, 33) für drei Betriebsfluide, einschließlich eines Fluids auf Oxidationsgasbasis, eines Fluids auf Brenngasbasis und eines Kühlfluids; wobei die Strömungsplatte einen Übergangsabschnitt (11) für mindestens eines der Betriebsfluide umfasst oder die Strömungsplatte einen Übergangsabschnitt (11) für jedes Betriebsfluid umfasst.

8. Plattenvorrichtung (10) nach einem der vorhergehenden Ansprüche, mit drei Fluidanschlüssen (31, 32, 33) für drei Betriebsfluide, einschließlich eines Fluids auf Oxidationsgasbasis, eines Fluids auf Brenngasbasis und eines Kühlfluids; wobei die Strömungsplatte auf einer Seite einen Übergangsabschnitt (11) für eines der Betriebsfluide und auf der anderen Seite einen Übergangsabschnitt (11) für ein anderes der Betriebsfluide aufweist.

9. Elektrochemische Brennstoffzellenvorrichtung mit einer Stapelanordnung von gestapelten Zellen (20) und aufnehmenden Fluidöffnungen (30, 31, 32, 33) für Betriebsfluide, die durch eine Stapelrichtung der Stapelanordnung hindurchgehen; wobei die Brennstoffzellenvorrichtung zwischen jeder der gestapelten Zellen (20) mindestens eine Plattenvorrichtung (10) nach einem der Ansprüche 1 bis 7 zum Verteilen und Sammeln eines Betriebsfluids zwischen den Zellen (20) und den Fluidöffnungen (30, 31, 32, 33) umfasst.

## Revendications

1. Dispositif de plaque (10) pour un empilement de piles à combustible électrochimiques (20) comprenant des piles empilées (20) ;
le dispositif de plaque (10) étant prévu pour chaque pile (20) pour distribuer et collecter un fluide sur des dimensions planes d'une pile (20) ; le dispositif de plaque (10) comprenant :
une section de cellule centrale (12) comprenant une pluralité de canaux sur des dimensions planes d'une cellule (20) ;
une section de raccordement externe (13) enfermant une ouverture de section transversale d'un raccordement de fluide (30, 31, 32, 33) s'étendant à travers le dispositif de plaque (10) dans une direction d'épaisseur ; et
une partie de transition (11) formant une section transversale d'écoulement de forme plate pour distribuer ou collecter un fluide à transférer dans une direction plane du dispositif de plaque (10) en communication fluidique entre l'orifice de fluide (30, 31, 32, 33) et la cellule (20), dans lequel une pluralité de caractéristiques d'écoulement (14) sont disposées à l'intérieur de la section de transition (11) et la section de transition (11) est entourée par une limite (17),
dans lequel le dispositif de plaque (10) comprend au moins une caractéristique de support (15, 16) qui est solidaire de la limite (17) avec la limite (17) et avec au moins l'une des caractéristiques d'écoulement (14) disposées le plus à l'extérieur des caractéristiques d'écoulement (14),
dans lequel des ouvertures de passage (18) sont disposées entre un orifice de fluide (30, 31, 32, 33) et la section de transition (11) pour établir une communication de fluide entre eux ; et
dans lequel un autre type des caractéristiques de support (16) et des parties de la limite (17) positionnées entre les ouvertures de passage (18) forment ensemble de manière solidaire des saillies de parois de canalisation s'étendant dans la section de transition (11).

2. Dispositif de plaque (10) selon la revendication 1, dans lequel un type des caractéristiques de support (15) et la limite (17) forment ensemble un contour en zigzag qui s'étend dans la partie de transition (11).

3. Dispositif de plaque (10) selon la revendication 2, dans lequel une partie de transition (11) pour un fluide de fonctionnement à base de gaz oxydant ou pour un fluide de fonctionnement à base de gaz combustible comprend le type de caractéristiques de support (15) qui forment un contour en zigzag d'un seul tenant avec la limite (17).

4. Dispositif de plaque (10) selon la revendication 1, dans lequel une partie de transition (11) pour un fluide de refroidissement comprend le type d'éléments de support (16) formés d'un seul tenant avec les saillies de délimitation (17) de parois de canalisation.

5. Dispositif de plaque (10) selon l'une quelconque des revendications précédentes, dans lequel au moins une partie de la pluralité de caractéristiques d'écoulement (14) est agencée selon un agencement de rangées équidistantes de caractéristiques d'écoulement (14) sous la forme de colonnes circulaires ou prismatiques pour la diffusion d'un écoulement de fluide.

6. Dispositif de plaque (10) selon la revendication 5, dans lequel au moins une autre partie de la pluralité de caractéristiques d'écoulement (14) comprend des caractéristiques d'écoulement (14) ayant une section transversale allongée pour guider un écoulement de fluide.

7. Dispositif de plaque (10) selon l'une quelconque des revendications précédentes, comprenant trois orifices de fluide (31, 32, 33) pour trois fluides de fonctionnement, y compris un fluide à base de gaz d'oxydation, un fluide à base de gaz combustible et un fluide de refroidissement ; dans lequel la plaque d'écoulement comprend une section de transition (11) pour au moins l'un des fluides de fonctionnement ou la plaque d'écoulement comprend une section de transition (11) pour chaque fluide de fonctionnement.

8. Dispositif de plaque (10) selon l'une quelconque des revendications précédentes, comprenant trois orifices de fluide (31, 32, 33) pour trois fluides de fonctionnement, y compris un fluide à base de gaz d'oxydation, un fluide à base de gaz combustible et un fluide de refroidissement ; dans lequel la plaque d'écoulement comprend une section de transition (11) pour l'un des fluides de fonctionnement sur un côté et une section de transition (11) pour un autre des fluides de fonctionnement sur l'autre côté.

9. Dispositif de pile à combustible électrochimique comprenant un ensemble empilé de cellules empilées (20) et des ouvertures de réception de fluide (30, 31, 32, 33) pour des fluides de fonctionnement passant à travers une direction d'empilement de l'ensemble empilé ; le dispositif de pile à combustible comprenant, entre chacune des cellules empilées (20), au moins un dispositif de plaque (10) selon l'une quelconque des revendications 1 à 7 pour distribuer et collecter un fluide de fonctionnement entre les cellules (20) et les ouvertures de fluide (30, 31, 32, 33).
